## Europäisches Patentamt
## European Patent Office
## Office européen des brevets

(19)

(11) Veröffentlichungsnummer : **0 017 861**
**B1**

(12) **EUROPÄISCHE PATENTSCHRIFT**

(45) Veröffentlichungstag der Patentschrift :
**03.08.83**

(21) Anmeldenummer : **80101774.0**

(22) Anmeldetag : **02.04.80**

(51) Int. Cl.³ : **A 61 C   1/08**

(54) **Zahnärztliches Handstück.**

(30) Priorität : **06.04.79 DEU 7910126**

(43) Veröffentlichungstag der Anmeldung :
**29.10.80 Patentblatt 80/22**

(45) Bekanntmachung des Hinweises auf die Patenterteilung : **03.08.83 Patentblatt 83/31**

(84) Benannte Vertragsstaaten :
**AT CH DE FR GB IT LI SE**

(56) Entgegenhaltungen :
**DE A 1 791 047**
**DE B 1 298 060**
**DE C 682 545**
**DE C 811 855**
**DE C 827 998**

(73) Patentinhaber : **SIEMENS AKTIENGESELLSCHAFT**
**Berlin und München Wittelsbacherplatz 2**
**D-8000 München 2 (DE)**

(72) Erfinder : **Schöller, Peter**
**Lange Zeile 87**
**D-8520 Erlangen (DE)**
Erfinder : **Podszus, Werner**
**Rotweg 4**
**D-8551 Weissenohe (DE)**

Jouve, 18, rue St-Denis, 75001 Paris, France

## Zahnärztliches Handstück

Die Erfindung bezieht sich auf ein zahnärztliches Handstück mit einem sich zum freien Ende hin verjüngenden Griffkörper, an dessen Oberfläche mehrere kleine, am Umfang gleichmäßig verteilt und in gleicher Größe angeordnete Abflachungen vorgesehen sind, die über den gesamten, für die Handhabung in Frage kommenden Längenabschnitt des Griffkörpers in Form von axial hintereinander liegenden Querreihen mit gleicher Anzahl in jeder Querreihe vorhanden sind und in Längsrichtung des Handstückes ausgerichtete Reihen bilden.

Bei zahnärztlichen Bohr-, Spritz- od. dgl. -handstücken bestehen hinsichtlich der Oberflächengestaltung der Griffkörper mehrere Forderungen. Eine Forderung ist, die Oberfläche möglichst schmutzunempfindlich und leicht reinigbar zu gestalten.

Bekannte Handstücke mit geriffelter, gerändelter oder gekordelter Oberfläche erfüllen diese Forderungen nicht, denn in den meist feinen und engen Rillen sammelt sich Schmutz besonders leicht an ; die Rillen sind außerdem schlecht zu reinigen.

Eine andere Forderung zielt dahin, die Oberfläche so auszubilden, daß das Handstück zumindest an den Stellen, wo der Benutzer das Handstück mit den Fingern umfaßt, griffig ist, und zwar sowohl in bezug auf eine axiale als auch auf eine drehende Handhabung des Handstückes. Des weiteren soll ein kontinuierliches Verdrehen und Längsverschieben des Handstückes in beliebig kleinen Abschnitten während der Benutzung möglich sein, ohne hierbei die Hand- und Fingerhaltung nennenswert ändern zu müssen. Die Forderung stellt sich deswegen, um mit dem am freien Ende des Handstückes befindlichen Werkzeug während einer Präparation beispielsweise vom Frontzahnbereich in den Backenzahnbebereich kontinuierlich, also ohne Unterbrechung, überwechseln zu können.

Auch die aus DE-C-827 998 und DE-C-682 545 bekannten zahnärztlichen Instrumente und Handstücke, bei denen im Griffbereich an mehreren Stellen des Griffkörpers jeweils sechs als Fingerauflageflächen dienende Abflachungen am Umfang vorhanden sind, erfüllen diese Forderungen nicht zufriedenstellend.

Bei den aus DE-C-827 998 bekannten Instrumenten handelt es sich um Spatel oder Schaber, deren stabförmige, im Querschnitt runde Griffkörper nach der Arbeitsseite des Instruments, also zur Werkzeugspitze hin, jeweils mindestens zwei wulstartige Verdickungen aufweisen. Diese Verdickungen sind im Durchmesser und in der Länge so bemessen, daß sie sich zwischen Daumen, Zeige- und Mittelfinger der den Griff umfassenden Hand legen. Sowohl die Wülste als auch die zwischen ihnen liegenden Einschnürungen sind zur Erhöhung der Griffigkeit mit Abflachungen versehen.

Die Wülste und Einschnürungen bewirken eine feste Zuordnung der das Instrument haltenden Finger zum Instrument selbst, d. h. Daumen, Zeige- und Mittelfinger haben in Längsrichtung des Instruments betrachtet eine feste Zuordnung ; das Instrument kann demnach nicht ohne weiteres unter Beibehaltung der Fingerhaltung während einer Präparation über einen größeren Bereich hinweg in beliebig kleinen Abschnitten in Längsrichtung verschoben und in beliebig kleinen Winkelabschnitten gedreht werden.

Das Gleiche gilt auch für das aus der DE-C-682 545 bekannte Handstück, welches zwar über einen bestimmten, für die Handhabung des Handstückes in Frage kommenden Längenabschnitt mehrere Reihen von Abflachungen enthält, jedoch zwischen den Reihen wiederum Verdickungen aufweist, die das geschilderte Verschieben des Instruments in Längsrichtung bzw. ein kontinuierliches « Entlanggleiten » der das Instrument haltenden Finger in axialer Richtung verhindern. Dies verhindern auch die zwischen den Abflachungen sowohl am Umfang als auch in Längsrichtung gesehen vorhandenen Stege zwischen den Abflachungen. Ein weiterer Nachteil ist darin zu sehen, daß nachdem am Umfang des Griffkörpers nur sechs Abflachungen vorhanden sind, das Handstück nur in gewissen Vorzugsstellungen gehalten und nur in einem relativ großen Winkelbereich gedreht werden kann.

Das Handstück kann nämlich praktisch nur in den Stellungen sicher gehalten werden, in denen die Finger auf den wenigen Abflachungen aufliegen. Unter Beibehaltung der Hand- und Fingerhaltung bedeutet dies aber, daß das Handstück bei dieser Oberflächengestaltung nur jeweils 120°-weise, bestenfalls 60°-weise, verdreht werden kann, ohne eine zusätzliche Veränderung der Hand- oder Fingerhaltung vornehmen zu müssen. Stellungen dazwischen sind insofern unangenehm, weil dort die Finger auf den zwischen den Abflachungen verbleibenden Stegen oder Rippen aufliegen.

Nachdem die Abflachungen in axialer Richtung gesehen sehr lang ausgebildet sind, ist außerdem keine befriedigende Führung des Handstückes gewährleistet.

Der im Anspruch 1 angegebenen Erfindung liegt die Aufgabe zugrunde, ein zahnärztliches Handstück der eingangs genannten Art dahingehend zu verbessern, daß einerseits eine gute Griffigkeit, und zwar sowohl in axialer als auch in bezug auf eine drehende Handhabung gegeben ist, wobei ein Verdrehen des Handstückes in beliebig kleinen Winkelabschnitten und ein axiales Verschieben des Handstückes bzw. ein « Entlanggleiten » der das Handstück umgreifenden Finger in kleinsten Abschnitten über einen großen Längenbereich ohne nennenswerte Veränderung der Hand- und Fingerhaltung möglich sein soll, und daß andererseits die Oberfläche so gestaltet ist, daß sie gut zu reinigen ist und keinen « Schmutzfänger » darstellt.

Anhand der Zeichnung wird ein Ausführungsbeispiel der Erfindung näher erläutert :

Es zeigen :

Figuren 1 und 2 ein zahnärztliches Bohrhandstück mit der erfindungsgemäßen Ausbildung der Oberfläche des Griffkörpers in zwei Seitenansichten,

Figur 3 einen Ausschnitt des Handstückes nach Fig. 1 in vergrößerter Darstellung,

Figuren 4 und 5 Schnitte entlang der Linien IV/IV und V/V in Fig. 3.

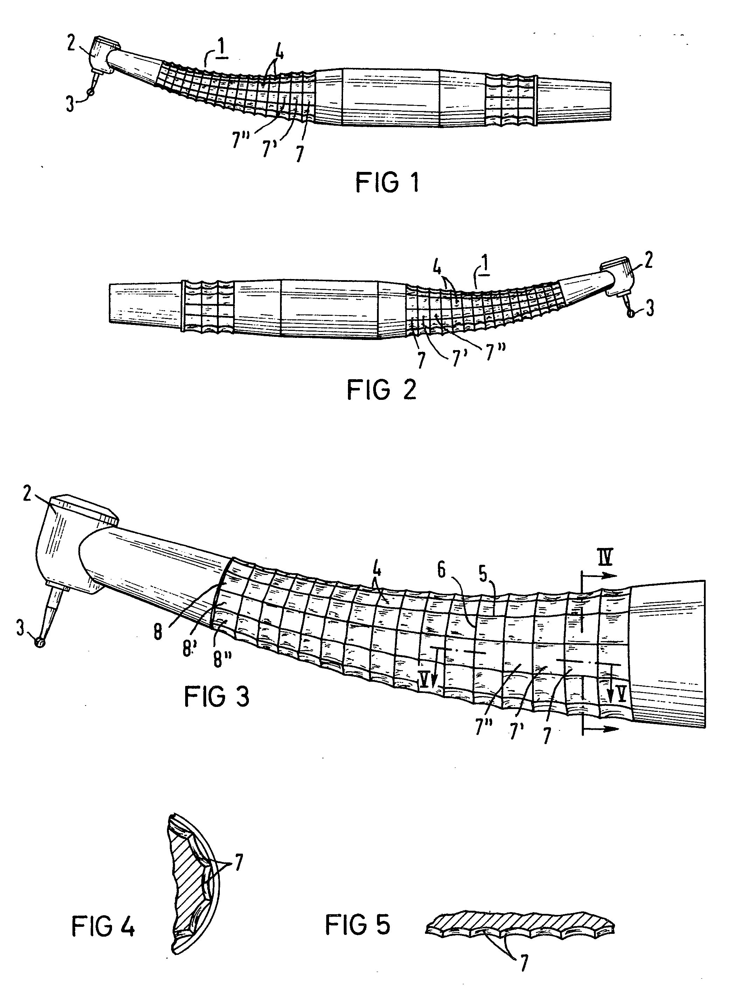

Die Fig. 1 zeigt in einer schaubildlichen Darstellung ein zahnärztliches Handstück mit einem Griffkörper 1, der an seinem freien Ende ein Kopfgehäuse 2 zur Aufnahme eines Drehantriebes für ein Bohrwerkzeug 3 trägt. Der Griffkörper 1 ist in dem Bereich, der für eine Handhaltung des Benutzers in Frage kommt, mit einer Vielzahl von relativ kleinen Abflachungen 4 versehen. Bei einem Durchmesser von etwa 18 bis 20 mm, den das Handstück an dem dem Kopfgehäuse 2 abgewandten Ende mißt, sind etwa dreizehn Abflachungen gleichmäßig verteilt am Umfang angeordnet. Die Abflachungen 4 haben, wie aus Fig. 3 zu entnehmen ist, eine quadratische äußere Begrenzung. Das Kantenmaß einer Abflachung beträgt im Bereich des größten Durchmessers des Griffkörpers etwa 4,5 mm.

Die Abflachungen 4 stehen dicht beieinander und bilden gemeinsame Berührungskanten 5, 6, von denen die Kanten 6 Umfangslinien bilden und damit jeweils Querreihen 7, 7', 7" ... begrenzen und die Kanten 5 längs des Griffkörpers verlaufende Linien bilden und damit Längsreihen 8, 8', 8" ... bilden. Jede Querreihe enthält am Umfang die gleiche Anzahl von Abflachungen ; die Größe der Abflachungen in den Querreihen 7, 7', 7" ... ändert sich also mit dem Durchmesser bzw. Umfang des Griffkörpers. Das Verhältnis der Tiefe einer Abflachung zu seiner Längs- bzw. Querausdehnung ist relativ klein ; es beträgt etwa 1 : 10, wobei der Übergang von der höchsten zur tiefsten Stelle der Abflachung allmählich erfolgt (siehe Fig. 4).

Die Abflachungen können mit Hilfe von Stirnfräsern, Radialfräsern od. dgl. in ein entsprechend der Grundform des Handstückes angepaßtes Rundmaterial als Ausgangsmaterial eingearbeitet sein.

Durch die vorgeschlagene Ausbildung der Oberfläche des Griffkörpers läßt sich sowohl in axialer als auch bei drehender Handhabung des Handstückes eine optimale Griffigkeit erzielen, wobei das Handstück in kleinsten Winkelabschnitten gedreht und auch axial verschoben werden kann, ohne daß dabei die Finger- und Handhabung nennenswert geändert zu werden braucht. Darüber hinaus erfüllt die vorgeschlagene Anordnung die Forderung nach einer guten Reinigung der Oberfläche und Vermeidung von Schmutzansatz optimal.

**Ansprüche**

1. Zahnärztliches Handstück mit einem sich zum freien Ende hin verjüngenden Griffkörper (1), an dessen Oberfläche mehrere kleine, am Umfang gleichmäßig verteilt und in gleicher Größe angeordnete Abflachungen (4) vorgesehen sind, die über den gesamten, für die Handhabung in Frage kommenden Längenabschnitt des Griffkörpers (1) in Form von axial hintereinander liegenden Querreihen (7, 7', 7", ... ) mit gleicher Anzahl in jeder Querreihe vorhanden sind und in Längsrichtung des Handstückes ausgerichtete Reihen bilden, dadurch gekennzeichnet, daß die Abflachungen (4) in jeder Querreihe (7, 7', 7", ... ) die gleiche Form haben und einander benachbarte Abflachungen (4) gemeinsame Kanten (5, 6) bilden, von denen die in Längsrichtung des Handstückes ausgerichteten Kanten eine durchgehende Linie bilden.

2. Handstück nach Anspruch 1, dadurch gekennzeichnet, daß bei einem Griffkörper (1) von etwa 18 bis 20 mm Durchmesser in einer Querreihe (7, 7', 7", ... ) am Umfang 10 bis 15 Abflachungen (4) vorgesehen sind.

**Claims**

1. A dental hand tool having a gripping body (1) which tapers towards the free end and the surface of which is provided with a plurality of small flats (4) which are of equal size and are evenly distributed around the periphery and located over the entire length of the gripping body (1) which is to be handled in the form of transverse rows (7, 7', 7", ... ), which are arranged axially one after the other, which are provided in the same number in each transverse row, and which form rows which are aligned in the longitudinal direction of the hand tool characterised in that the flats (4) have the same shape in each transverse row (7, 7', 7", ... ), and that adjoining flats (4) form common edges (5, 6), of which those edges which are aligned in the longitudinal direction of the hand tool, form a continuous line.

2. A hand tool as claimed in Claim 1, characterised in that 10 to 15 flats (4) are arranged in a transverse row (7, 7', 7", ... ) for a gripping body (1) having a diameter of approximately 18 to 20 mm.

**Revendications**

1. Pièce à main de dentisterie, avec un corps de préhension (1) s'amincissant vers l'extrémité libre et sur la surface duquel sont prévus plusieurs petits méplats (4) répartis uniformément sur la périphérie de dimensions identiques, lesdits méplats existants, sur la totalité de la section longitudinale du corps de préhension (1) qui est prévue pour la manipulation, sous la forme de rangées transversales (7, 7', 7", ... ) situées axialement les unes derrière les autres et en un même nombre dans chaque rangée transversale, et de rangées alignées dans le sens longitudinal de la pièce à main, caractérisée par le fait que les méplats (4) ont, dans chaque rangée transversale (7, 7', 7'', ... ) la même forme et que des méplats voisins (4) forment des arêtes communes (5, 6) parmi lesquelles les arêtes qui s'étendent dans la direction longitudinale de la pièce à main forment une droite continue.

2. Pièce à main selon la revendication 1, caractérisée par le fait que dans le cas d'un corps de préhension (1) ayant un diamètre d'environ 18 à 20 mm, 10 à 15 méplats (4) périphériques sont prévus dans une rangée transversale.

FIG 1

FIG 2

FIG 3

FIG 4

FIG 5

1